# EUROPEAN PATENT APPLICATION

(11) **EP 3 447 106 A1**
(43) Date of publication of application: **27.02.2019**
(21) Application number: 17187864.8
(22) Date of filing: 25.08.2017
(51) Int. Cl.: C09K 8/584, E21B 43/16

(54) **PROCESS FOR ENHANCED OIL RECOVERY**

(71) Applicant: BASF SE, 67056 Ludwigshafen am Rhein (DE)
(72) Inventor: Zhan, Bao, Beijing (CN); Dalvi, Vaibhav, 400705 Navi Mumbai (IN); Mishra, Ashok Kumar, 038987 Singapore (SG); Jung, Marc Rudolf, 67056 Ludwigshafen (DE)
(74) Representative: BASF IP Association

(57) **Abstract**

Process for enhanced oil recovery by injecting an aqueous formulation comprising a water-soluble, thickening polymer through an injection well into a subterranean formation and recovering a crude oil-water emulsion from the production well, followed by separating the crude oil-water emulsion into an aqueous phase and a crude oil phase, wherein the aqueous phase is treated oxidatively with molecular oxygen in the presence of ferrous salts and a complexing agent.

## Description

The present invention relates to a process for enhanced oil recovery by injecting an aqueous formulation comprising a water-soluble, thickening polymer through an injection well into a subterranean formation and recovering a crude oil-water emulsion from the production well, followed by separating the crude oil-water emulsion into an aqueous phase and a crude oil phase, wherein the aqueous phase is treated oxidatively with molecular oxygen in the presence of ferrous salts and a complexing agent.

Enhanced Oil Recovery (EOR) can be applied when the production of oil by conventional primary or secondary processes ends in an ageing oil field. In an embodiment of EOR an aqueous solution comprising a thickening polymer is injected into an oil-bearing, subterranean formation through an injection well. Thickening polymers may in particular be high-molecular acryl amide copolymers, such as copolymers of acryl amide and anionic monomers. The aqueous solution flows through the subterranean formation towards the so-called production well thereby mobilizing oil caught in the formation. From the production well an oil-water emulsion may be recovered. Such an EOR technique is also known as "polymer flooding".

The crude oil-water emulsion recovered from the formation comprises crude oil and formation water and/or injected water. For further processing of the crude oil it needs to be separated into a crude oil phase and a water phase. The phase separation of the water-oil emulsion should be effected very rapidly and very completely. Only in this way, in view of the large conveying volumes, can the apparatus for phase separation, for example settling tanks, be kept at a minimum size. On extraction platforms at sea, the use of very small, compact apparatus for phase separation is a necessity in construction terms owing to the limited space, and small systems of course generally require lower capital costs than large systems. In order to expedite phase separation or even in order to enable phase separation it is known in the art to add suitable demulsifiers to the oil-water emulsions.

In course of ongoing polymer flooding the water phase of the oil-water emulsion comprises increasing amounts of thickening polymer. Such oil-water emulsions comprising polymers are often very stable and -if at all- only difficult to break. Another issue associated with chemical EOR is the treatment of the produced fluid comprising thickening polymers in order to be in-line with guidelines issued by regulatory authorities (especially relevant for offshore locations).

It is known in the art to treat produced water comprising water-soluble, thickening polymers in order to degrade the polymer thereby reducing its viscosity.

US 2012/0108473 A1 discloses a process for treatment of produced water obtained from an enhanced oil recovery process containing at least a water soluble polymer. An oxidizing agent is injected into produced water in a quantity such that the viscosity of said water is reduced to a value below 2 cps. The oxidizing agent may be selected from the group consisting of persulfate, perborate, hydrogen peroxide, ozone, sodium hypochlorite, and sodium chlorite.

US 2014/0020899 A1 discloses treating the aqueous portion of a fluid produced from a subterranean formation which comprises an aqueous portion and a hydrocarbon portion with chlorine dioxide.

US 2014/0374103 A1 discloses a process for treating oil field waste water with a biocide comprising hydrogen peroxide to form treated water. An additional oxidizing agent may be present. Examples of oxidizers comprise halogen oxidizers, oxygen oxidizers, peroxide, nitrate, nitrite, dichromate, nitrogen-chloro oxidizer, or a combinations thereof.

US 2016/0312109 A1 relates to a method for reducing the viscosity of a well treatment fluid comprising adding one or more iron-containing compounds and one or more booster compounds to the well treatment fluid which comprises water and at least one actyl amide containing polymer. The method can be used to reduce viscosity and to facilitate the decomposition of acrylamide-containing polymers. In particular, the process may be a fracturing process. The iron-containing compound may in particular be ferrous iron. The booster compounds may be selected from the group consisting of urea; ethylenediaminetetraacetic acid (EDTA); salts of EDTA; citric acid; aminotricarboxylic acid and its salts; polyphosphonated and poly phosphate compounds; boric acid and its salts; alkali metal salts of carbonates; diethylenetriaminepentaacetic acid (DTPA); humic acids; and ligno sulfates.

M. Lu et al, Bioresource Technology 102 (2011) 2555-2562 disclose laboratory-scale experiments of evaluating the performance of a treatment process for oilfield wastewater based on combining chemical oxidation, performed by a zerovalent iron
(ZVI), i.e. iron powder, ethylenediamine tetraacetic acid (EDTA) and air, with biological degradation, carried out in a batch activated sludge reactor. The results showed that the optimum pretreatment conditions were 150 mg/L EDTA, 20 g/L ZVI, and a 180-min reaction time, respectively. Under these conditions, removal efficiencies for hydrolyzed polyacrylamide (HPAM), total petroleum hydrocarbons (TPH), and chemical oxygen demand (COD) were 66%, 59%, and 45%, respectively. The produced water from polymer flooding was obtained from Henan Oilfield, China.

S. H. Kang et al, Environ. Sci. Technol. 43, 878-883 studied oxidative degradation of organic compounds using zerovalent iron in the presence of natural organic matter. It has been demonstrated that zero valent iron can react with O₂ to form ferrous ion and H₂O₂ which leads to the Fenton reaction.

D.K. Ramsden and K. McKay, Polymer Degradation and Stability 15(1986), 15 - 31 describe a method of degrading poly acrylamide in aqueous solution by autoxidation of Fe²⁺ in the presence of chelating agents and molecular oxygen. The study does not mention oilfield applications at all.

Although there are already techniques for degrading polymers in water produced from subterranean formation, there is still a need for improvement.

It was the objective of the present invention to provide a cost-effective method of degrading thickening polymer in the water phase of oil-water emulsions produced from subterranean formations in course of enhanced oil recovery methods.

Accordingly, a process for enhanced oil recovery from an oil-bearing, subterranean formation penetrated by at least one injection well and at least on production well has been found, comprising at least the steps of
(1) injecting an aqueous formulation comprising a water-soluble, thickening polymer through the injection well(s) into the subterranean formation and recovering a crude oil-water emulsion from the production well(s), wherein the aqueous phase of the crude oil - water emulsion produced comprises water-soluble, thickening polymers injected through the injection well and/or decompositions products thereof,
(2) separating the crude oil-water emulsion into an aqueous phase and a crude oil phase,
wherein the process comprises an additional step (3) of oxidative treatment of the aqueous phase with molecular oxygen in the presence of at least ferrous salts and a complexing agent thereby decreasing the viscosity of the aqueous phase.

Specific details of the invention are as follows:
To execute the process for enhanced oil recovery according the present invention, at least one production well and at least one injection well are sunk into the oil-bearing, subterranean formation. In general, a deposit will be provided with a plurality of injection wells and with a plurality of production wells.

For performing the process, an aqueous formulation comprising at least a water-soluble, thickening polymer is injected through the injection well(s) and a crude oil-water emulsion is recovered from the production well(s). The process comprises at least the process steps (1), (2), and (3).

### Aqueous polymer formulation

The aqueous formulation used for the process for enhanced oil recovery according to the present invention comprises at least a water-soluble, thickening polymer. Of course, also a mixture of two or more different water-soluble, thickening polymers may be used.

Water-soluble, thickening polymers suitable for enhanced oil recovery are known in the art. Basically, the water-soluble, thickening polymer may be any kind of water-soluble, thickening polymer suitable for enhanced oil recovery. Examples of suitable water-soluble polymers comprise biopolymers such as schizophyllan, guar or cellulose derivatives or synthetic polymers such as polyalkylenethers or polymers comprising acryl amide.

In a preferred embodiment of the invention, the water-soluble, thickening polymer is a homo- or copolymer comprising (meth)acryl amide, preferably acryl amide. Preferably, it is a copolymer comprising (meth)acryl amide and at least one further hydrophilic, monoethylenically unsaturated monomer. In one embodiment, the amount of acryl amide in copolymers is from 30 % by wt. to 80 % by wt.. Preferably, weight average molecular weight M_{w} of such homo- or copolymer comprising (meth)acryl amide is from 1 Mio g/mol to 20 Mio g/mol, for example from 5 Mio g/mol to 20 Mio g/mol.

In one embodiment of the invention such further monoethylenically unsaturated monomers comprise at least one acid group and/or a salt thereof. Examples comprise acrylic acid or methacrylic acid, crotonic acid, itatonic acid, maleic acid or fumaric acid, monomers comprising sulfonic acid groups, such as vinylsulfonic acid, allylsulfonic acid, 2-acrylamido-2-methylpropanesulfonic acid (ATBS), 2-methacrylamido-2-methylpropanesulfonic acid, 2-acrylamidobutanesulfonic acid, 3-acrylamido-3-methylbutanesulfonic acid or 2-acrylamido-2,4,4-trimethylpentanesulfonic acid, or monomers comprising phosphonic acid groups, such as vinylphosphonic acid, allylphosphonic acid, N-(meth)acrylamidoalkylphosphonic acids or (meth)acryloyloxyalkylphosphonic acids. Counterions in salts may in particular be alkali metal ions such as Na⁺ or K⁺, ammonium NH₄⁺ or organic ammonium ions.

Preferred monomers comprise -COOH and/or -SO₃H groups or salts thereof, in particular acrylic acid and/or ATBS. In certain embodiments, the water-soluble, thickening polymers comprise from 50 to 90 % by wt. of acryl amide and from 10 to 40 % by wt. of acrylic acid and/or ATBS, relating to the sum of all components of the water-soluble, thickening polymers.

In another embodiment, further monoethylenically unsaturated monomers may be selected from cationic monomers, in particular monomers comprising quaternary ammonium groups. Examples of such monomers comprise 3-trimethylammonium propylacrylamide chloride and 2-trimethylammonium ethyl methacrylate chloride.

In another embodiment, further monoethylenically unsaturated monomers may be selected from neutral monomers. Examples of such monomers comprise N-methyl(meth)acrylamide, N, N'-dimethyl(meth)acrylamide , and N-methylolacrylamide, N-vinyl derivatives such as N-vinylformamide, N-vinylacetamide, N-vinylpyrrolidone or N-vinylcaprolactam, and vinyl esters, such as vinyl formate or vinyl acetate.

In another embodiment, further monoethylenically unsaturated monomers may be selected from associative monomers. Associative monomers comprise besides hydrophilic groups also hydrophobic groups. In aqueous solution such hydrophobic groups associate with each other and/or with other components of the solution comprising hydrophobic groups (such as surfactants) thereby enhancing the viscosity of the polymer solution.

Such associative monomers are basically known in the art. Suitable associative monomers are described for example in WO 2010/133527 A1, WO 2012/069477 A1 or WO 2015/086468 A1.

In one embodiment the associative, monoethylenically monomer may be an acrylic acid ester of the general formula H₂C=C(R¹)-(C=O)-O-(-CH₂-CH₂-O-)_{z}-R² (I), wherein R¹ is H or methyl, z is a number from 10 to 50, and R² is an aliphatic and/or aromatic, straight-chain or branched hydrocarbon moiety having 8 to 40 carbon atoms.

In another embodiment the associative, monoethylenically monomer may be a vinyl ether of the general formula H₂C=C(R¹)-O-(-CH₂)ₖ-O-(-CH₂-CH-O-)ₗ-(-CH₂-CH(R³)-O-)ₘ-(-CH₂-CH-O-)ₙH (II), wherein R³ is a hydrocarbon group having 2 to 10 carbon atoms, preferably 2 or 3 carbon atoms and more preferably 2 carbon atoms, k is from 1 to 6, I from 10 to 50, m from 5 to 30, and n from 0 to 5. Preferably, k is from 2 to 4, I from 20 to 40, m from 10 to 20, and n from 1 to 5.

The amount of associative monomers may preferably be from 0.2 to 5 % by wt. relating to the sum of all components of the water-soluble, thickening polymer, preferably from 0.2 to 2 % by wt., more preferably from 0.5 to 1.5 % by wt.

In one embodiment, the water soluble, thickening polymer comprises 40 to 70 % by wt. of acryl amide, 25 to 55 % by wt. of arylic acid and/or ATBS or salts thereof and 0.2 to 5 % by wt. of an associative monomer, preferably one of formula (I) or (II) and has a weight average molecular weight M_{w} from 1 Mio g/mol to 20 Mio g/mol, preferably from 5 Mio g/mol to 20 Mio g/mol.

Methods of making such water-soluble, thickening polymers are known. By the way of example, we refer to WO 2015/086468 A1.

In another embodiment, the thickening polymer may a so-called hydrolyzed poly acrylamide (HPAM). HPAM's are made by partially hydrolyzing polyacrylamide thereby generating acrylate groups. In one embodiment of the invention, HPAM's having a degree of hydrolysis of 25 % to 40 % may be used.

The aqueous formulation for the process according to the present invention can be made up in fresh water, or else in water comprising salts. Of course, it can also comprise mixtures of different salts. For example, it is possible to use sea water to make up the aqueous formulation, or it is possible to use produced formation water, which is reused in this manner. In the case of offshore production platforms, the formulation is generally made up in sea water. In the case of onshore production units, the polymer can advantageously first be dissolved in fresh water, and the resulting solution can be diluted to the desired use concentration with formation water. The formulation can preferably be prepared by initially charging the water, sprinkling in the copolymer as a powder and mixing it with the water.

The salts may especially be alkali metal salts and alkaline earth metal salts. Examples of typical cations comprise Na⁺, K⁺, Mg²⁺ or Ca²⁺, and examples of typical anions comprise chloride, bromide, hydrogen carbonate, sulfate or borate.

When the formulation comprises salts, generally at least one or more than one alkali metal ion, especially at least Na⁺, is present. In addition, it is also possible for alkaline earth metal ions to be present, where the weight ratio of alkali metal ions/alkaline earth metal ions is generally ≥ 2, preferably ≥ 3. The anions present are generally at least one or more than one halide ion, especially at least Cl⁻. In general, the amount of Cl⁻ is at least 50% by weight, preferably at least 80% by weight, based on the sum of all anions.

The total amount of all salts in the aqueous formulation is generally 20 000 ppm to 350 000 ppm (parts by weight), based on the sum of all components of the formulation. When sea water is used to make up the formulation, the salt content is generally 20 000 ppm to 50 000 ppm, and, when formation water is used, generally 100 000 ppm to 250 000 ppm. The amount of alkaline earth metal ions may be 1000 to 53 000 ppm.

The aqueous formulation may of course comprise further components. Examples of further components comprise biocides, stabilizers or inhibitors.

The concentration of the water-soluble, thickening polymer is chosen by the skilled artisan such that the aqueous formulation has the desired viscosity for the end use. In one embodiment, the concentration of the water-soluble, thickening polymer in the aqueous formulation is from 0.01 to 2% by weight based on the sum of all components of the aqueous formulation, preferably from 0.05 to 0.5% by weight.

### Step (1)

In step (1), the aqueous formulation comprising at least a water-soluble, thickening polymer as described above, preferably the acryl amide comprising polymers as described above is injected through the injection well(s) into the subterranean formation, flows towards the production well(s) thereby mobilizing crude oil and a crude oil - water emulsion is recovered from the production well(s). When starting with enhanced oil recovery the front of the aqueous formulation comprising water-soluble, thickening polymers (the so-called "polymer flood") is far apart from the production well. Consequently, during such initial phase of the process the water phase in the crude oil - water emulsion produced from the production well comprises formation water and optionally water injected into the formation in preceding steps, e.g. a preceding water flooding step. However, after such initial step with ongoing polymer flooding more and more of the polymer flood injected also reaches the production well. Consequently, after said initial phase the aqueous phase of the crude oil - water emulsion produced form the production well comprises also water-soluble, thickening polymers injected through the injection well and/or decompositions products thereof. Some degree of decomposition may happen in the formation, for example some lowering of the molecular weight of the polymer injected. The skilled artisan knows, how to limit decomposition, e.g. by adding suitable stabilizers to the aqueous formulations for injection.

### Step (2)

In step (2) crude oil-water emulsion produced from the production well is split into an aqueous phase and a crude oil phase.

For splitting crude oil - water emulsions preferably suitable demulsifiers are added. Demulsifiers for splitting crude oil - water emulsions are known in the art. Examples comprise polyethyleneimines alkoxylated with ethylene oxide and propylene oxide, hyper-branched polymers, alkylphenolalkoxylates or alkylphenol-formaldehyde condensation products.

Plants and processes for splitting crude oil - water emulsions are known to those skilled in the art. The emulsion is typically split on site, i.e. while still at the oilfield. This may be a plant installed at a production well or a central plant in which the splitting of the crude oil emulsions is undertaken for several production wells of an oilfield. Separators for splitting crude oil - water emulsions are basically known. The separator may comprise plants which separate only under the influence of gravity, i.e., for example, settling tanks, or else other separators, for example hydrocyclones.

After the separation, the crude oil phase can be transported into the refinery for further processing. The aqueous phase removed can preferably be reused for injection.

### Step (3)

In step (3) the aqueous phase comprising the water-soluble, thickening polymers and/or decomposition products thereof is treated oxidatively with molecular oxygen thereby at least partly decomposing the water-soluble polymer thus reducing the viscosity of the aqueous phase.

Such oxidative treatment may serve two main purposes: (i) Due to the polymer in the aqueous phase the separation can be delayed or in the extreme case even prevented. Reducing the viscosity helps to separate the crude oil - water emulsion or may in the first place enable it. (ii) It may be necessary to decompose the polymer for other purposes, i.e. because it is intended to use the water for other oilfield processes or because environmental guidelines may require to degrade polymers in aqueous waste-water before disposing thereof.

Step (3) may be performed before, during or after step (2).

In an embodiment of the invention, step (3) is performed before or during step (2). In that case, the ferrous salt and the complexing agent are added to the crude oil - water emulsion before or during step (2) and molecular oxygen is allowed to contact the crude oil - water emulsion. Said embodiment is in particular useful in case of (i), i.e. if the phase separation is delayed.

In another embodiment, step 3 is performed after step (2). In that case, the ferrous salt and the complexing agent are added to the separated aqueous phase. Said embodiment is in particular useful if only (ii) is the concern.

The treatment of the aqueous phase with molecular oxygen is performed in the presence of at least a ferrous salt and at least a complexing agent. Optionally further components may be present.

Without wishing to be bound by theory we believe that the system of Fe²⁺/complexing agents converts O₂ into the superoxide radical O₂⁻ which seems to be the active species decomposing the water-soluble polymer thereby reducing the viscosity of the aqueous phase.

Examples of ferrous salts comprise FeSO₄* 7 H₂O, Fe(II)chloride, Fe(II)bromide or Ammonium iron(II) sulfate. In a preferred embodiment, iron(II) sulfate, FeSO₄* 7 H₂O, may be used.

Complexing agents are generally anionic compounds which can complex Fe²⁺ ions. The complexing agents may especially be carboxylic acid or phosphonic acid derivatives comprising at least two carboxylic acid or phosphonic acid groups. Examples of complexing agents include ethylenediaminetetraacetic acid (EDTA), ethylenediaminesuccinic acid (EDDS), diethylenetriaminepentamethylenephosphonic acid (DTPMP), methylglycinediacetic acid (MGDA) and nitrilotriacetic acid (NTA). Of course, the corresponding salts of each may also be involved, for example the corresponding sodium salts. In a preferred embodiment of the invention the complexing agent is EDTA.

Optionally, further components may be used in course of oxidative treatment.

In one preferred embodiment of the invention additionally a reducing agent capable of reducing Fe(III) to Fe(II) may be used. We observed that in course of the oxidative treatment Fe(II) becomes converted to Fe(III). Adding a water-soluble reducing agent which converts Fe(III) to Fe(II) helps to maintain a high concentration of active Fe(II) species in the aqueous phase. In a preferred embodiment of the invention the water-soluble reducing agent is ascorbic acid.

For performing step (3) the components to be used may be directly added, however preferably in a first step an aqueous solution comprising at least the ferrous salt(s), the complexing agent(s) and optionally further components is formed which is then added to crude oil - water emulsion and/or the separated aqueous phase while mixing. Forming the aqueous solution is preferably done under exclusion of molecular oxygen.

Thereafter, molecular oxygen is introduced into the separated aqueous phase and/or the crude oil - water emulsion. This may be done for example by injecting air into the aqueous phase and/or the crude oil - water emulsion. It is frequently advisable to additionally mix aqueous phase and/or the crude oil -water emulsion, for example by stirring. In one embodiment, air may be injected into a separation tank.

The amount of Fe²⁺ should be from 0.1 to 1000 ppm, preferably from 0.5 to 100 ppm relating to the water-soluble polymer in the aqueous solution.

The concentration of the complexing agents should be from 0.5 to 5000 ppm, preferably from 2.5 to 500 ppm relating to the water-soluble polymer in the aqueous solution.

Preferably, the complexing agents should be used in molar excess as compared to Fe(II). In one embodiment, the molar ratio complexing agent / Fe²⁺ is from 2 to 6.

The concentration of the reducing agents should be from 1 to 10000 ppm, preferably from 5 to 1000 relating to the water-soluble polymer in the aqueous solution.

### Advantages of the present invention:

The present invention uses molecular oxygen as oxidizing agent which is readily available at the oilfield. The concentration of ferrous salts and complexing agent can be kept low. It is homogenous, aqueous solution which may easily be distributed in the aqueous phase of the crude oil-water emulsion. The oxidative treatment works already at room temperature and normal pressures. It also works for saline aqueous phases such as sea water or formation water. In particular, it still works when the aqueous phase to be treated comprises Ca²⁺ ions and/or Mg²⁺ ions. It also works with different types of polymers. The present invention in particular is suitable for aqueous phases comprising water-soluble, hydrophobically associative polymers.

The examples which follow are intended to illustrate the invention in detail:

### Materials used:

| **Chemical** | **Description** |
|---|---|
| Copolymer 1 | High-molecular weight anionic acryl amide (hydrolyzed poly acrylamide) Mw:∼ 20 million Dalton, Anionicity:∼ 25 mol % |
| Copolymer 2 | High-molecular weight anionic acryl amide Copolymer comprising acryl amide, ATBS and associative monomer (synthesized according to WO 2015/086468 A1, page 62 (copolymer 1)) Intrinsic viscosity) 12-15 dL/g |
| EDTA | Sigma-Aldrich |
| Ascobic acid | Sigma-Aldrich |
| FeSO₄*7H₂O | Sigma-Aldrich |
| Synthetic sea water | 3.408 g/L sodium sulfate, |
| | 0.168 g/L sodium bicarbonate, |
| | 0.746 g/L potassium chloride, |
| | 9.149 g/L magnesium chloride hexahydrate, |
| | 1.911 g/L Calcium chloride dihydrate, |
| | 23.5 g/L Sodium chloride |

### Degradation tests

### Test series 1

For a first test series an aqueous solution comprising 0.25 wt. % of copolymer 1 and 5 g/l NaCl was prepared.

For the tests 40 g of the solution of copolymer 1 were put into an open vial and aqueous solutions of additive(s) to be tested were added. Thereafter the vials were shaken at ambient temperature to incorporate atmospheric oxygen and thereafter allowed to stand for 10 minutes. The viscosity of each sample was determined at 5 rpm at 25 °C in a Brookfield viscometer (spindle ULA0).

The additives, their amounts and the measured viscosities are summarized in table 1.

**Table 1: Results of test series 1, *relates to the amount of aqueous solution**

| **No.** | **Additive(s)** | **Amount*** | **Viscosity [mPas]** |
|---|---|---|---|
| C1 | - | - | 97.6 |
| 1 | Aqueous solution of FeSO₄·7H₂O (0.1 mmol/l) with EDTA (0.1 mmol/l) | 0.2 g | 2.4 |
| C2 | Aqueous solution of FeSO₄·7H₂O (0.1 mmol/l) | 0.2 g | 6.4 |
| 2 | Aqueous solution of FeSO₄·7H₂O (0.1 mmol/l) with EDTA (0.1 mmol/l) | 0.1 g | 3.5 |
| 3 | Aqueous solution of FeSO₄·7H₂O (0.1 mmol/l) with EDTA (0.1 mmol/l) | 0.02 g | 30.7 |

The examples and comparative examples demonstrate the effect of Fe²⁺/O₂/EDTA on the viscosity of the polymer solution. Adding Fe²⁺/EDTA to the polymer solution (Example 1 in the present of molecular oxygen significantly reduces the viscosity as compared to a solution without EDTA/Fe²⁺ (Comparative example 1), i.e. the polymer is degraded. Adding Fe²⁺ alone without EDTA also has some effect on the viscosity, however the effects are not that large. Also at reduced concentration (Examples 2 and 3) there still is an effect on the viscosity, however no longer that pronounced.

### Test series 2:

For a second test series an aqueous solution comprising 0.25 wt. % of copolymer 1 and 30 g/l NaCl was prepared.

The tests were performed as described for test series 1. The additives, their amounts and the measured viscosities are summarized in table 2.

**Table 2: Results of test series 2**

| **No.** | **Additive(s)** | **Amount** | **Viscosity [mPas]** |
|---|---|---|---|
| C3 | - | - | 46.7 |
| 4 | Aqueous solution of FeSO₄·7H₂O (0.1 mmol/l) with EDTA (0.1 mmol/l) | 0.2 g | 1.7 |
| C4 | Aqueous solution of FeSO₄·7H₂O (0.1 mmol/l) | 0.2 g | 13.4 |
| 5 | Aqueous solution of FeSO₄·7H₂O (0.1 mmol/l) with EDTA (0.1 mmol/l) | 0.1 g | 3.0 |
| 6 | Aqueous solution of FeSO₄·7H₂O (0.1 mmol/l) with EDTA (0.1 mmol/l) | 0.02 g | 14.4 |
| 7 | Aqueous solution of FeCl₂·4H₂O (0.1 mmol/l) with EDTA (0.1 mmol/l) | 0.2 g | 2.2 |
| 8 | Aqueous solution of FeCl₂·4H₂O (0.1 mmol/l) with EDTA (0.1 mmol/l) | 0.1 g | 2.5 |

Table 2 demonstrates that the findings with a solution comprising 5 g/l NaCl basically also are observed at higher NaCl concentrations, however the number are different.

### Test series 3 (with ascorbic acid)

For a third test series an aqueous solution comprising 0.25 wt. % of copolymer 1 and (a) 5 g/l NaCl or (b) a 0.25 wt. % solution of copolymer 2 in synthetic sea water as described above were used.

For each of the tests 40 g of the solutions of copolymer 1 either in NaCl or in synthetic seawater were put into an open vial. Thereafter the vials were shaken at ambient temperature to incorporate atmospheric oxygen and thereafter allowed to stand for 10 minutes. Thereafter 0.0035 g of ascorbic acid were added to the solution in the vial, the vial again shaken at ambient temperatures and allowed to stand for 10 min. For comparative purposes further tests were performed without the addition of ascorbic acid. The viscosity of each sample was determined at 5 rpm at 25 °C in a Brookfield viscometer (spindle ULA0). The results are summarized in table 3.

**Table 3: Results of test series 3**

| **No.** | **Medium** | **Additive(s)** | **Amount** | **Viscosity [mPas]** |
|---|---|---|---|---|
| C5 | 5g/l NaCl | - | - | 97.6 |
| 9 | 5g/l NaCl | Aqueous solution of FeSO₄·7H₂O (0.1 mmol/l) with EDTA (0.1 mmol/l) | 0.02 g | 30.7 |
| 10 | 5g/l NaCl | Aqueous solution of FeSO₄·7H₂O (0.1 mmol/l) with EDTA (0.1 mmol/l) + ascorbic acid | 0.02 g | 2.6 |
| C6 | Synthetic seawater | - | - | 32.4 |
| 11 | Synthetic seawater | Aqueous solution of FeSO₄·7H₂O (0.1 mmol/l) with EDTA (0.1 mmol/l) + ascorbic acid | 0.02 | 1.8 |

The results of test series 3 demonstrate that adding ascorbic acid significantly enhances the performance of the Fe²⁺/EDTA/O₂ system. Degradation of the polymer is far more pronounced when adding additionally ascorbic acid.

### Test series 4:

For a forth test series an aqueous solution comprising 0.3 wt. % of copolymer 2 in synthetic sea water as described above was used.

The tests were performed as in test series 3. Table 4 summarizes the results.

**Table 4: Results of test series 4**

| **No.** | **Medium** | **Additive(s)** | **Amount** | **Viscosity [mPas]** |
|---|---|---|---|---|
| C6 | Synthetic seawater | - | - | 51 |
| 11 | Synthetic seawater | Aqueous solution of FeSO₄·7H₂O (0.1 mmol/l) with EDTA (0.1 mmol/l) + ascorbic acid | 0.02 | 1.8 |

### Oil-water separation tests:

For the tests a crude oil-water emulsion was used. The crude oil-water emulsions were filled into vials. To the crude oil-water emulsions an aqueous solution of copolymer 1 or of copolymer 2 was added and the mixture vigorously shaken thereby achieving a crude oil - water emulsion in which the aqueous phase comprises a thickening polymer. In a second step an aqueous solution of the catalyst (EDTA / Fe²⁺) was added to the crude oil - water emulsion comprising thickening polymers and the mixture again vigorously shaken. For comparative purposes one sample was prepared without adding the catalyst. The concentrations of the polymers and the catalyst in the aqueous phase are summarized in the following table.

**Table 2: Experimental parameters for oil-water separation tests**

| Test No. | Copolymer | Copolymer concentration | Fe²⁺ | EDTA |
|---|---|---|---|---|
| A | 1 | 5000 ppm | 2.8 ppm | 14.6 ppm |
| B (Comparative) | 1 | 5000 ppm | - | - |
| C | 2 | 4000 ppm | 2.8 ppm | 14.6 ppm |
| D (comparative) | 2 | 4000 ppm | - | - |

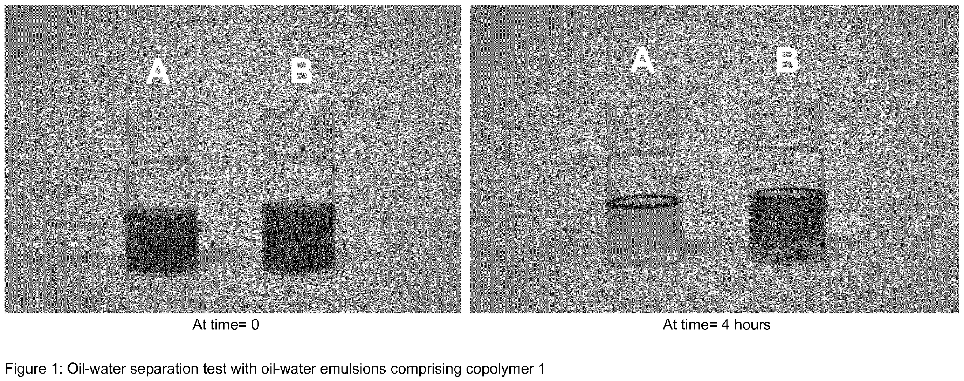

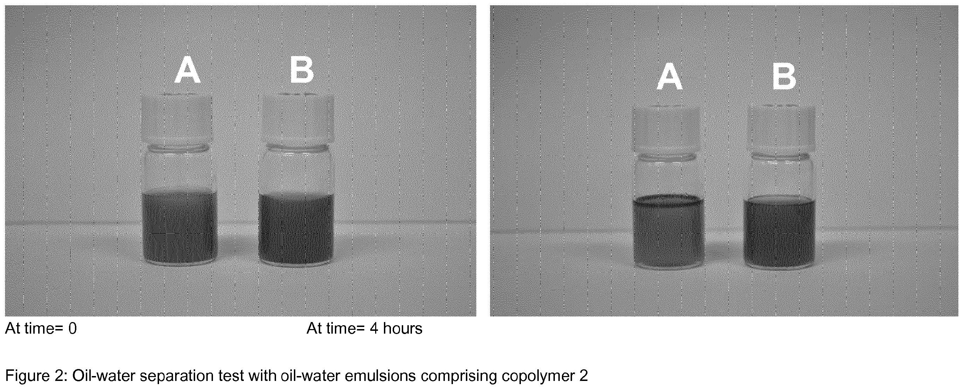

The vials were allowed to stand at room temperature and the separation of the oil and the water phase was inspected visually. Figures 1 and 2 show the crude-oil-water emulsions at the beginning of the tests and after 4 h. The separation of the crude oil - water emulsions in the presence of the EDTA / Fe²⁺ catalyst was better than without such a catalyst.

## Claims

1. Process for enhanced oil recovery from an oil-bearing, subterranean formation penetrated by at least one injection well and at least on production well comprising at least the steps of
(1) injecting an aqueous formulation comprising a water-soluble, thickening polymer through the injection well(s) into the subterranean formation and recovering a crude oil-water emulsion from the production well(s), wherein the aqueous phase of the crude oil - water emulsion produced comprises water-soluble, thickening polymers injected through the injection well and/or decompositions products thereof,
(2) separating the crude oil-water emulsion into an aqueous phase and a crude oil phase,
wherein the process comprises an additional step (3) of oxidative treatment of the aqueous phase with molecular oxygen in the presence of at least ferrous salts and a complexing agent thereby decreasing the viscosity of the aqueous phase.

2. Process according to claim 1, wherein the complexing agent is at least one selected from ethylenediaminetetraacetic acid (EDTA), ethylenediaminesuccinic acid (EDDS), diethylenetriaminepentamethylenephosphonic acid (DTPMP), methylglycinediacetic acid (MGDA) and nitrilotriacetic acid (NTA).

3. Process according to claim 1, wherein the complexing agent is EDTA.

4. Process according to any of claims 1 to 3, wherein the water-soluble, thickening polymer is a copolymer comprising (meth)acryl amide and at least one further hydrophilic, monoethylenically unsaturated monomer comprising at least one acid group and/or a salt thereof.

5. Process according to claim 4, wherein the monomer comprising acid groups is selected from acrylic acid and/or ATBS.

6. Process according to any of claims 4 to 5, wherein the polymer comprises additionally at least one associative monomer.

7. Process according to claim 6, wherein the associative monomer has the formula H₂C=C(R¹)-(C=O)-O-(-CH₂-CH₂-O-)_{z}-R² (I), wherein R¹ is H or methyl, z is a number from 10 to 50, and R² is an aliphatic and/or aromatic, straight-chain or branched hydrocarbon moiety having 8 to 40 carbon atoms.

8. Process according to claim 6, wherein the associative monomer has the formula H₂C=C(R¹)-O-(-CH₂)ₖ-O-(-CH₂-CH-O-)ₗ-(-CH₂-CH(R³)-O-)ₘ-(-CH₂-CH-O-)ₙH (II), wherein R³ is a hydrocarbon group having 2 to 10 carbon atoms, k is from 1 to 6, I from 10 to 50, m from 5 to 30, and n from 0 to 5.

9. Process according to any of claims 1 to 8, wherein the water-soluble, thickening polymer has a weight average molecular weight M_{w} from 1 Mio g/mol to 20 Mio g/mol.

10. Process according to claim 1, wherein the water soluble, thickening polymer comprises 40 to 70 % by wt. of acryl amide, 25 to 55 % by wt. of arylic acid and/or ATBS or salts thereof and 0.2 to 5 % by wt. of an associative monomer having the formula
H₂C=C(R¹)-O-(-CH₂)ₖ-O-(-CH₂-CH-O-)ₗ-(-CH₂-CH(R³)-O-)ₘ-(-CH₂-CH-O-)ₙH (II),
wherein R³ is a hydrocarbon group having 2 to 10 carbon atoms, k is from 1 to 6, I from 10 to 50, m from 5 to 30, and n from 0 to 5, and having a weight average molecular weight M_{w} from 1 Mio g/mol to 20 Mio g/mol.

11. Process according to any of claims 1 to 10, wherein the aqueous phase comprises salts.

12. Process according to any of claims 1 to 10, wherein the aqueous phase comprises Mg²⁺ and/or Ca²⁺.

13. Process according to any of claims 1 to 12, wherein in course of oxidative treatment with molecular oxygen additionally a reducing agent is present.

14. Process according to claim 13, wherein the reducing agent is ascorbic acid.

15. Process according to any of claims 1 to 14, wherein step (3) is performed before or during step (2).
